Europäisches Patentamt

European Patent Office

Office européen des brevets

(11) Publication number: **0 354 017**
**A2**

## (12) EUROPEAN PATENT APPLICATION

(21) Application number: **89307854.3**

(22) Date of filing: **02.08.89**

(51) Int. Cl.5: **B 29 C 43/12**

(30) Priority: **02.08.88 IT 2161788**

(43) Date of publication of application:
**07.02.90 Bulletin 90/06**

(84) Designated Contracting States:
**AT BE CH DE ES FR GB LI SE**

(71) Applicant: **VEDRIL S.p.A.**
**31, Foro Buonaparte**
**Milan (IT)**

(72) Inventor: **Colombo, Dario**
**2/6, Viale Ca' Granda**
**Milan (IT)**

(74) Representative: **Whalley, Kevin et al**
**MARKS & CLERK 57/60 Lincoln's Inn Fields**
**London WC2A 3LS (GB)**

(54) **Process for the isostatic molding of polymerizable organic liquids.**

(57) A process for the isostatic molding of polymerizable organic liquids comprising:

a) feeding a polymerizable liquid to a mold;

b) heating and pressurizing the inside part of the mold;

wherein the mold comprises a generally concave semi-mold (1) and a generally convex semi-mold (2), and wherein one of the two semi-molds is provided with a flexible membrane (12) covering its surface an forming with it a hollow space for the circulation of a fluid thermostated under pressure.

FIG.1.

**Description**

## PROCESS FOR THE ISOSTATIC MOLDING OF POLYMERIZABLE ORGANIC LIQUIDS

The present invention relates to a process for the isostatic molding of polymerizable organic liquids.

As known, one of the problems related to the manufacture of articles from thermosetting resins is the shrinkage of the polymeric material, which in addition to yielding manufactured articles having surface defects, can also give rise to latent tensions which, in time, can cause fissures and cracks impairing irreversibly the finished article.

To-avoid such drawbacks non-stiff molds for thermosetting resins have been suggested, wherein one of the two semi-molds, generally the female semi-mold, can axially move to follow the shrinkage of the material during the hardening step, shrinkage that, in some cases and with definite materials, can reach 30%.

However, by this system it is possible to obtain satisfactory results in that the movable semi-mold can control the shrinkage of the polymeric material only along the axial direction of the movement, but not the shrinkage along the direction perpendicular to it.

We have now found that it is possible to mold polymerizable organic liquids without the drawbacks associated with the shrinkage of the polymeric material by a process which uses molds wherein the whole surface of one of the two semi-molds in contact with the polymeric material is not stiff.

The present invention provides a process for the isostatic molding of polymerizable organic liquids, comprising:

    a) feeding a polymerizable liquid to a mold;

    b) heating and pressurizing the inside part of the mold; wherein the mold comprises a first generally convex semi-mold and a second generally concave semi-mold, and wherein one of the two semi-molds is provided with a flexible membrane covering its surface and forming with it a hollow space for the circulation of a fluid, usually a liquid, kept at constant temperature under pressure.

According toa preferred embodiment of the present invention the semi-mold bearing the flexible membrane is the generally concave semi-mold the surface of which, facing the membrane, is preferably provided with net-worked grooves or channels able to favour the circulation of the fluid thermostated under pressure.

This fluid is preferably a diathermic oil having a low viscosity and, during the polymerization, it is suitably kept at pressures from 2 to 8 atm.

The flexible membrane, applied on the semi-mold in such a manner to warrant a perfect seal, can be of the anti-adhesive type both for the fluid and the polymer, or alternatively of the adhesive type for the polymer only.

In the first case, membranes consisting of elastomeric sheets, having a thickness below 2 mm and resistant to the temperatures of the thermostated fluid generally at 50 to 100°C are preferred; examples of these materials are the polyolefinic rubbers such as SBR rubbers (styrene-butadiene rubber), EPR (ethylene-propylene rubber), polybutadiene, polyisoprene, and the acrylic rubbers such as NBR (nitryl-butadiene rubber).

In the latter case, sheets of thermoplastic material having thickness below 2 mm and resistant to the above mentioned range of temperatures are preferred; examples of these materials are polyolefins such as polyethylene, polypropylene, PVC (polyvinylchloride); PVC is particularly preferred.

Any polymerisable organic liquid able to produce shrinkage during the hardening step can be used in the process of the present invention, although methylmethacrylate as such or reinforced with mineral fillers such as silica, alumina and mica is preferred; these compositions are described in Italian Patent Application No. 23050 A/87 (EP-A-0321193). In this patent application there are described fluid suspensions, stable and able to be hardened, obtained by mixing a polymerizable liquid such as methylmethacrylate or a syrup containing methylmethacrylate and polymethylmethacrylate with a finely ground mineral filler, for example crystoballite having a surface area from 0.5 to 10 $m^2/g$, in the presence of an agent silanizing the filler, such as gamma-methacryloxypropyltrimethoxysilane, and of a catalyst for the hydrolysis of the silane, this catalyst being selected from the ammonium salts of organic acids, such as isopropylammonium methacrylate.

The mineral filler is preferably used in amounts from 30 to 80% by weight of the total, whereas the silane and the catalyst are preferably used in quantities from 0.01 to 2% and 0.01 to 0.5% by weight respectively, of the filler and of the total of the composition.

The invention will be further described, by way of example only, with reference to the accompanying drawings, in which:

    figure 1 is a schematic view of a molding circuit incorporating a mold (longitudinal section) for the manufacture of wash-basins for kitchens; and

    figures 2a and 2b are enlarged views of the mold relating to the distance AA indicated in figure 1, respectively during and after the molding operation.

With reference to drawings, the circuit used in the process of the prespnt invention comprises a mold consisting of two semi-molds 1 and 2, a pump 3, generally a high delivery pump (about 2 $m^3$/minute) and low head (not over 8 atm) for the thermostated fluid, a heat-exchanger 4 placed downstream with respect to the pump, a hydraulic vessel 5, pressure gauges 6 and 7 placed before the pump and after the heat-exchanger, and flow valves 8 and 9 upstream and downstream of the mold and adjustable by means of a pressure gauge 10 placed downstream before the valve 9. The semi-mold 1 is essentially concave in shape, while the semi-mold 2 is essentially convex in shape, as shown.

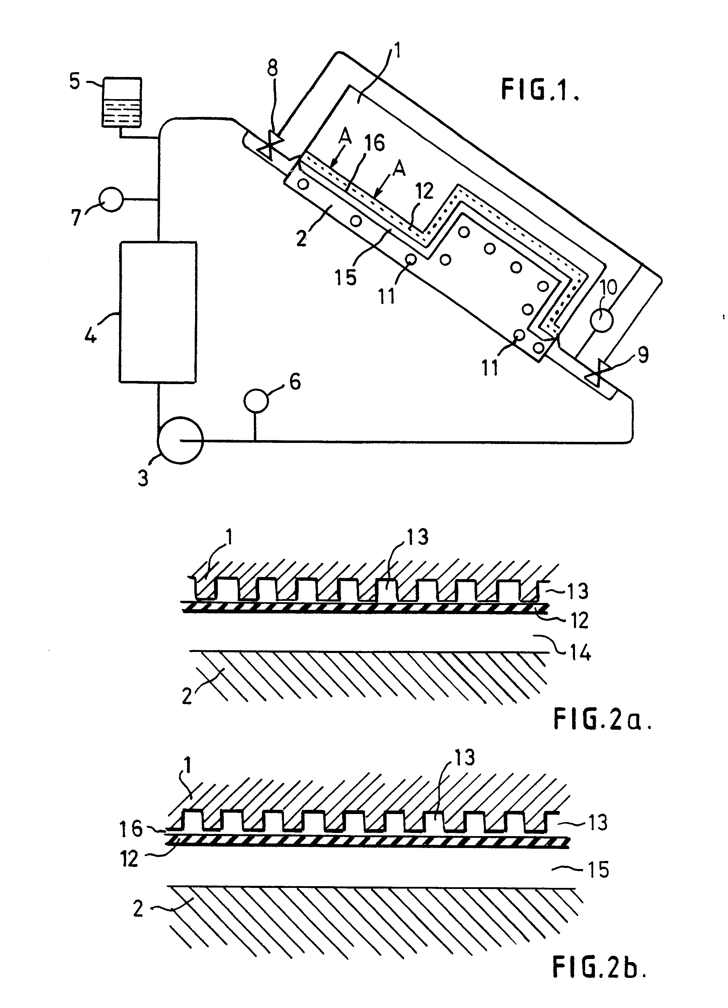

The semi-mold 2 is provided in its inner body with a coil 11 for the circulation of the thermostated fluid while the semi-mold 1 is provided with an elastic membrane 12, indicated by a dotted line in figure 1, and with channels 13 to allow the circulation of the thermostated fluid in the hollow space between the surface of the semi-mold 1 and the elastic membrane 12.

During the molding operation the polymerizable liquid is fed to the mold by means and systems not illustrated in the drawings; after the mold has been fed, the unpolymerized liquid mass 14 is pressurized (for instance 5 atm) and heated at the polymerization temperature (e.g. 90°C for methylmethacrylate) by the thermostated fluid flowing in the mold both through the coil 11 and channels 13.

During the polymerization, the liquid mass begins to harden and to undergo a shrinkage effect; this effect is counterbalanced by the elastic membrane 12 which remains always adhering to the surface of the manufactured article because of the pressure exerted by the thermostated fluid. In this way a polymerization at constant pressure at all points of the mold is obtained, thus countering the negative effects of shrinkage that, as above said, can cause undesired latent tensions in the finished article.

At the end of the polymerization the hardened mass 15 has undergone a shrinkage 16 that, as illustrated in figure 2, is about 10%.

Various modifications may be made in the process for the isostatic molding of polymerizable organic liquids illustrated in the accompanying drawings.

## Claims

1. A process for the isostatic molding of polymerizable organic liquids, which comprises:

a) feeding a mold with a polymerizable liquid;

b) heating and pressurizing the inner part of the mold; characterized in that the mold comprises a first generally convex semi-mold (2) and a second generally concave semi-mold (1), wherein one of the two semi-molds is provided with a flexible membrane (12) covering its surface and forming with it a hollow space for the circulation of a fluid thermostated under pressure.

2. A process as claimed in claim 1, characterized in that the semi-mold bearing the flexible membrane is the essentially concave semi-mold (1).

3. A process as claimed in claim 2, characterized in that the surface of the essentially concave semi-mold facing the membrane is provided with grooves or channels (13) forming a reticule.

4. A process as claimed in any of claims 1 to 3, characterized in that the thermostated fluid is a diathermic oil, having a low viscosity, kept during the polymerization at a pressure from 2 to 8 atm.

5. A process as claimed in any of claims 1 to 4, characterized in that the flexible membrane is of the anti-adhesive type both for the fluid and the polymer.

6. A process as claimed in claim 5, characterized in that the membrane comprises a thermoconductive elastomeric sheet having a thickness below 2 mm and resistant to temperatures from 50 to 100°C.

7. A process as claimed in claim 6, characterized in that the elastomer is selected from polyolefinic rubbers, acrylic rubbers and nitryl rubbers.

8. A process as claimed in any of claims 1 to 4, characterized in that the flexible membrane is of the adhesive type for the polymer.

9. A process as claimed in claim 8, characterized in that the membrane comprises a sheet of thermoconductive thermoplastic material having a thickness below 2 mm and resistant to temperatures from 50 to 100°C.

10. A process as claimed in claim 9, characterized in that the thermoplastic material is a polyolefin.

11. A process as claimed in claim 10, characterized in that the thermoplastic material is PVC.

12. A process as claimed in any of claims 1 to 11, characterized in that the polymerizable organic liquid is methylmethacrylate as such or reinforced with one ore more mineral fillers.

FIG.1.

FIG.2a.

FIG.2b.